(19) Europäisches Patentamt
European Patent Office
Office européen des brevets

(11) **EP 0 927 351 B1**

(12) **EUROPÄISCHE PATENTSCHRIFT**

(45) Veröffentlichungstag und Bekanntmachung des Hinweises auf die Patenterteilung:
**10.11.2004 Patentblatt 2004/46**

(21) Anmeldenummer: **97936560.8**

(22) Anmeldetag: **26.07.1997**

(51) Int Cl.[7]: **G01N 27/12**

(86) Internationale Anmeldenummer:
**PCT/DE1997/001577**

(87) Internationale Veröffentlichungsnummer:
**WO 1998/012547 (26.03.1998 Gazette 1998/12)**

(54) **VORRICHTUNG ZUR LUFTGÜTEMESSUNG**

AIR QUALITY MEASURING DEVICE

DISPOSITIF POUR MESURER LA QUALITE DE L'AIR

(84) Benannte Vertragsstaaten:
**DE ES FR GB IT**

(30) Priorität: **19.09.1996 DE 19638204**

(43) Veröffentlichungstag der Anmeldung:
**07.07.1999 Patentblatt 1999/27**

(73) Patentinhaber: **paragon AG**
**33129 Delbrück (DE)**

(72) Erfinder: **WEIGOLD, Thomas**
**D-76547 Sinzheim (DE)**

(74) Vertreter: **Lelgemann, Karl-Heinz, Dipl.-Ing.**
**Patentanwälte Spalthoff und Lelgemann,**
**Postfach 34 02 20**
**45074 Essen (DE)**

(56) Entgegenhaltungen:
EP-A- 0 546 735          US-A- 4 166 380
US-A- 4 327 361          US-A- 4 785 658

- **PATENT ABSTRACTS OF JAPAN vol. 10, no. 284 (P-501) [2340] , 26.September 1986 & JP 61 104246 A (HITACHI LTD.), 22.Mai 1986,**

EP 0 927 351 B1

**Beschreibung**

Stand der Technik

Die Erfindung bezieht sich auf eine Vorrichtung zur Luftgütemessung.

Stand der Technik ist es, daß ein analoges Signal einen spannungsabhängigen Generator (VCO) steuert. Der spannungsgesteuerte Generator gibt ein digitales Signal aus, wobei die Frequenz ein Maß für die Spannung des analogen Signals ist.

Aus Patent Abstract of Japan, Vol. 10, No. 284 (P-501) zu JP-A 61104246 ist eine Vorrichtung bekannt, bei der die Luftfeuchtigkeit mit einem Feuchtigkeitssensor erfasst wird, der das Ausgangssignal einer astabilen Kippschaltung beeinflusst, die ihrerseits ein RC-Glied sowie einen Komparator enthält. Die am Ausgang des Komparators vorliegende Ausgangsspannung weist eine Schwingungsdauer auf, die im wesentlichen vom RC-Glied abhängt, das durch einen Kondensator und den Feuchtigkeitssensor realisiert ist. Das RC-Glied bildet die Beschaltung des invertierenden Eingangs des Komparators und ist mithin im Gegenkopplungszweig angeordnet.

Aus der US-A-4 166 380 ist ein Halbleiter-Gassensor bekannt, der mit einer regulierten Spannungsquelle betrieben wird und mittels dem ein Signal erzeugt wird, das für die Konzentration eines Gases in der Luft kennzeichnend ist. Mittels einer Messvorrichtung wird das sich ergebende Signal dargestellt, so dass es möglich ist, zu entscheiden, ob ein Bereich gefährlich ist oder nicht. Ein variabler Oszillator, der an einen Lautsprecher angeschlossen ist, reagiert auf das erzeugte Signal, so dass ein hörbares Ticken erzeugt wird, mittels dem es möglich ist, eine Undichtigkeit, ein Leck od.dgl. zu lokalisieren.

Der Erfindung liegt die Aufgabe zugrunde, eine einfache und störunanfällige Signalaufbereitung für einen Luftgütesensor bereitzustellen. Die Aufgabe wird durch die im Patentanspruch 1 angegebenen Merkmale gelöst.

Vorteile der Erfindung.

Bei der erfindungsgemäßen Vorrichtung zur Luftgütemessung ist ein Sensor vorgesehen, dessen Sensorwiderstand von der Luftgüte abhängt. Dieser Sensorwiderstand ist Teil einer Signalverarbeitung, die den Sensorwiderstand in ein Ausgangssignal mit einer vom Sensorwiderstand abhängenden Periodendauer T umsetzt. Die Periodendauer T des Ausgangssignals ist somit ein Maß für den Sensorwiderstand. Dieses frequenzbestimmte Ausgangssignal ist unempfindlicher gegenüber eingestrahlten oder leitungsgebundenen Störungen, als dies bei einem analogen Signal der Fall wäre, dessen Amplitude die Nutzinformation beinhaltet. Auch Störungen aufgrund von Temperatureinflüssen können reduziert werden. Zeit- bzw. frequenzabhängige Ausgangssignale lassen sich bei einigen Mikro-Controllern mit höherer Auflösung erfassen als Analogspannungen. Steht als Ausgangssignal ein binäres Signal mit variabler Periodendauer zur Verfügung, so wird eine einfache Signalverarbeitung in Digitaltechnik möglich. Auf aufwendige analoge Bauteile kann damit verzichtet werden.

Als Spannung/Zeit-Umsetzer ist eine astabile Kippschaltung aus RC-Glied und Komparator verwendet. An einem invertierenden Eingang eines Komparators ist ein Kondensator C gegen ein Bezugspotential geschaltet und ein Widerstand R mit dem Ausgang des Komparators verbunden. An dem nicht invertierenden Eingang des Komparators ist ein Sensorwiderstand $R_s$ gegen ein Bezugspotential geschaltet und ein zweiter Widerstand R2 mit dem Ausgang des Komparators verbunden. Am Ausgang des Komparators wird das Ausgangssignal abgegriffen. Mit dieser Beschaltung wird erreicht, daß die Periodendauer T des Ausgangssignals logarithmisch von dem Sensorwiderstand abhängt. Dieser logarithmische Verlauf der Periodendauer T stimmt mit den Sensorwiderstand/Luftgüte-Kennlinien der Luftgütesensoren überein, die ebenfalls logarithmisch bzw. exponentiell verlaufen. Dadurch läßt sich eine konstante Empfindlichkeit über mehrere Dekaden hinweg erzielen. Auf Analog-Logarithmierer, die ebenfalls konstante Empfindlichkeit bewirken würden, kann verzichtet werden. Das Ausgangssignal mit variabler Periodendauer T ist im Vergleich zum Ausgangssignal eines Analog-Logarithmierers störunempfindlicher.

Durch die in den abhängigen Ansprüchen aufgeführten Maßnahmen sind vorteilhafte Weiterbildungen möglich. Als Signalverarbeitung können Spannung/Zeit- oder Spannung/Frequenz-Umsetzer verwendet werden. Diese auch als spannungsgesteuerte Oszillatoren bezeichneten Schaltungen sind als Standard-IC's erhältlich.

Bevorzugte Verwendung findet die Vorrichtung zur Luftgütemessung in Kraftfahrzeugen. In Abhängigkeit von der Luftgüte werden hierbei die Belüftungssysteme geregelt.

Weitere zweckmäßige Maßnahmen ergeben sich aus der Beschreibung.

Zeichnung

Es zeigen Figur 1 ein Blockschaltbild, Figur 2 ein Beispiel für eine Schaltungsanordnung sowie Figur 3 mögliche Ausgangssignalverläufe der erfindungsgemäßen Vorrichtung.

Beschreibung der Ausführungsbeispiele

Eine Luftgüte 10 wird von einem Sensor 11 in ein Meßsignal 12 umgeformt. Eine Signalverarbeitung 13 wandelt dieses Meßsignal 12 in ein Ausgangssignal 14.

Gemäß einem Ausführungsbeispiel besteht die Signalverarbeitung 13 aus einem Komparator 21, an dessen nicht invertierenden Eingang ein Sensorwiderstand $R_s$ 17 gegen. Bezugspotential geschaltet ist, und ein zweiter Widerstand R2 19 ist mit dem Ausgang des Komparators 21 verbunden. An dem invertierenden Eingang des Komparators 21 ist ein Kondensator C 18 gegen Bezugspotential geschaltet, und ein Widerstand R 20 ist mit dem Ausgang des Komparators 21 verbunden. Am Ausgang des Komparators 21 wird gegen das Bezugspotential das Ausgangssignal 14 abgegriffen.

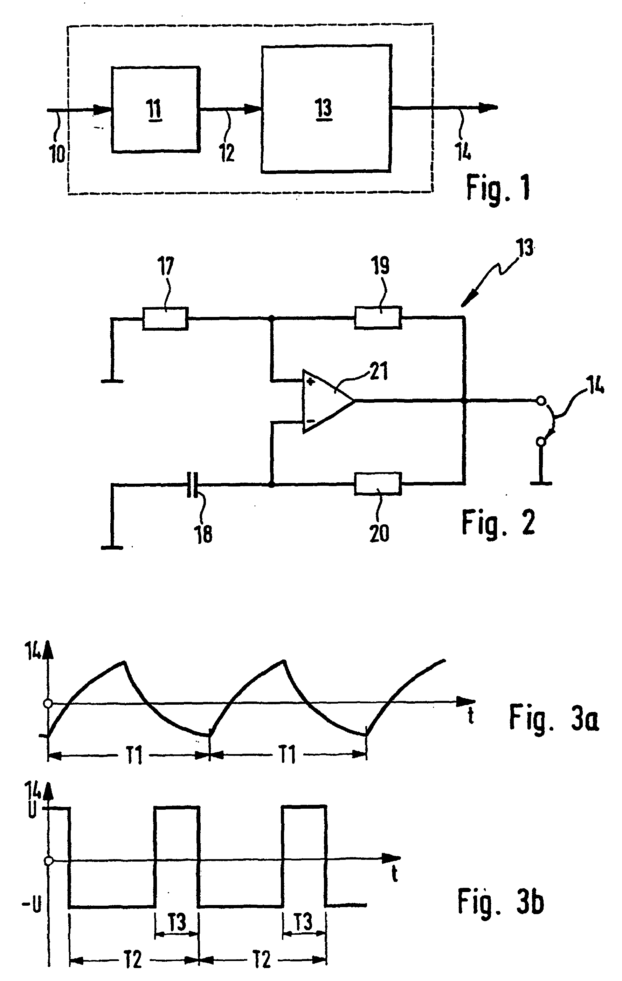

Gemäß Figur 3a zeichnet sich der zeitliche Verlauf des Ausgangssignals 14 durch exponentiellen Anstieg und Abfall aus, was sich nach der ersten Periodendauer T1 wiederholt. Das in Figur 3b gezeigte binäre Ausgangssignal 14 wiederholt sich mit einer zweiten Periodendauer T2. Innerhalb dieser zweiten Periodendauer T2 nimmt das binäre Ausgangssignal 14 während einer dritten Periodendauer T3 den Wert logisch 1 an, der der Spannung U entspricht.

Die Vorrichtung zur Luftgütemessung funktioniert folgendermaßen: Der Sensor 11 soll die Luftgüte 10 bestimmen. Unter Luftgüte 10 wird insbesondere die Luftzusammensetzung wie beispielsweise die vorhandene Konzentration von Kohlenmonoxid oder Stickoxid verstanden. Der Sensorwiderstand $R_s$ 17 des Sensors 11 verändert sich in Abhängigkeit von der Schadstoffkonzentration. Die üblicherweise verwendeten CO- bzw. $NO_x$-Sensoren weisen eine exponentielle Widerstands-/Konzentrations-Kennlinie auf. Als Sensor 11 kann ebenfalls ein resistiver Sensor verwendet werden. Alle diese Sensoren 11 geben als Meßsignal 12 einen Sensorwiderstand $R_s$ 17 in Abhängigkeit von der Luftgüte 10 ab. Da die Kennlinien wegen ihres exponentiellen Verlaufs einen entsprechend großen Wertebereich über mehrere Dekaden aufweisen, ist eine logarithmische Auswertung sinnvoll, um eine konstante Empfindlichkeit zu erhalten.

In Abhängigkeit von der Luftgüte läßt sich beispielsweise bei einem Kraftfahrzeug das Belüftungssystem steuern. Eine hohe Schadstoffkonzentration, wie sie beispielsweise in Tunnels auftritt, führt zu einem Abschalten des Gebläses und/oder Schließen von Lüftungsklappen.

Die Signalverarbeitung 13 wandelt das Meßsignal 12 in ein Ausgangssignal 14 mit variabler Periodendauer T, T1, T2, T3 um. Als Signalverarbeitung 13 können beispielsweise Spannung/Zeit- oder Spannung/Frequenz-Umsetzer zum Einsatz kommen. Als Eingangsspannung dieser Umsetzer dient beispielsweise eine am Sensorwiderstand $R_s$ 17 abgegriffene Spannung, die dem Sensorwiderstand $R_s$ 17 proportional ist. Im Endeffekt ist damit eine Analog-Digital-Umsetzung erreicht.

Bei einem Impulsbreiten-Umsetzer wird die zu messende Spannung mit einer Sägezahnspannung verglichen. Auch ein Zweirampen-Analog-Digital-Umsetzer ist geeignet, eine analoge Spannung zeitabhängig darzustellen. Der Spannung/Frequenz-Umsetzer erhält als Eingangsgröße die umzusetzende Spannung und liefert eine Folge von Rechteckimpulsen. Die Frequenz dieser Impulse ist der Höhe der anliegenden Spannung proportional. Eine Spannungs-Frequenz-Umsetzung kann ebenfalls nach dem Ladungsbilanzverfahren erfolgen. Die Spannungs-Frequenz-Kennlinie ist bei diesem bekannten Verfahren eine Gerade.

Die astabile Kippschaltung aus RC-Glied und Komparator gemäß Figur 2 ist auch unter der Bezeichnung Multivibrator bzw. Relaxationsoszillator bekannt. Der Sensorwiderstand $R_s$ 17 wirkt in dieser Schaltung frequenzbestimmend. Zum Zeitpunkt des Einschaltens der in Figur 2 gezeigten Kippschaltung ist die Spannung am Kondensator Null. Der Komparator 21 liefert als Ausgangssignal 14 eine positive Spannung U, wie aus Figur 3b ersichtlich. Diese Spannung lädt über den Widerstand R die Kapazität C 18 auf. Die Schaltschwelle in Form der am Sensorwiderstand Rs 17 abfallenden Spannung wird von dem Spannungsteiler, bestehend aus dem Sensorwiderstand $R_s$ 17 und dem zweiten Widerstand R2 19, und dem Ausgangssignal 14 festgelegt. Erreicht die Spannung am Kondensator C 18 diese Schaltschwelle, so kippt der Komparator 21 und liefert eine Ausgangsspannung -U. Der Ladestrom des Kondensators C 18 fließt nun in die entgegengesetzte Richtung. Der Kondensator C 18 entlädt sich so lange, bis eine zweite Schaltschwelle erreicht ist, die den negativen Wert der ersten Schaltschwelle aufweist. Das Ausgangssignal 14 des Komparators 21 wechselt wiederum die Polarität, am Ausgang liegt die positive Spannung U an. Der bereits beschriebene Vorgang wiederholt sich.

Mit Hilfe des exponentiellen Lade- und Entladeverlaufs des Kondensators C 18 läßt sich die Periodendauer T, T1, T2, T3 rechnerisch ermitteln.

$$T = 2*R*C*\ln\left(1 + \frac{2*R_s}{R2}\right) \quad (1)$$

Wird der Quotient $2R_s/R2$ sehr viel größer als 1, so vereinfacht sich Gleichung (1) folgendermaßen:

$$T = 2*R*C*\ln \frac{2*R_s}{R2} \quad\quad (2)$$

Dieser logarithmische Zusammenhang der Periodendauer T und des Sensorwiderstandes $R_s$ 17 bezieht sich auf eine Schaltungsanordnung gemäß Figur 2. Für diese Schaltungsanordnung ist ein Ausgangssignal 14 gemäß Figur 3b realistisch. Die dort bezeichnete zweite Periodendauer T2 entspricht der Periodendauer T der Formeln (1) und (2). Der logarithmische Zusammenhang zwischen Periodendauer T und Sensorwiderstand $R_s$ 17 ist damit der eingangs beschriebenen Charakteristik des Sensors 11 angepaßt.

Dadurch läßt sich insbesondere eine konstante Empfindlichkeit über mehrere Dekaden hinweg erreichen.

Die Vorrichtung zur Luftgütemessung ist ausdrücklich nicht auf das in Figur 2 gezeigte Schaltungsbeispiel begrenzt. So sind durchaus andere Ausgangssignalverläufe 14 denkbar, wie sie Figur 3 zeigt. Der Sensorwiderstand $R_s$ 17 kann beispielsweise in ein Ausgangssignal 14 mit einer ersten Periodendauer T1 umgesetzt werden, welches innerhalb der ersten Periodendauer T1 exponenentiell ansteigt und daraufhin wieder abfällt. Nach der ersten Periodendauer T1 wiederholt sich dieses exponentielle Ansteigen und Abklingen. In Übereinstimmung mit Figur 3b kann eine Umsetzung des Sensorwiderstandes $R_s$ 17 in eine Periodendauer T, T1, T2, T3 erfolgen, wobei bei einer konstanten zweiten Periodendauer T2, die eine Grundperiodendauer darstellt, eine dritte Periodendauer T3 variiert wird. Dies entspricht einer Beeinflussung des Tastverhältnisses. Darüberhinaus besteht die Möglichkeit, sowohl die Grundperiodendauer T2 als auch das Tastverhältnis über T3 zu variieren. Hierfür sind entsprechende Modulationsverfahren anzuwenden.

Zur Ermittlung der vom Sensorwiderstand $R_s$ 17 abhängenden Periodendauer T, T1, T2, T3 stehen Standardbauelemente zur Verfügung. Neben einer digitalen Erfassung ist ebenso eine Umwandlung in eine analoge Spannung möglich. Einige Mikro-Controller zeichnen sich dadurch aus, daß Analogspannungen beispielsweise mit 8 Bit Auflösung, Zeiten jedoch mit 16 Bit Auflösung gemessen werden.

In der Schaltungsanordnung gemäß Figur 2 ist als gemeinsames Bezugspotential Masse verwendet. Dies ist jedoch nicht zwingend erforderlich. So ist es beispielsweise durchaus sinnvoll, den Sensorwiderstand $R_s$ 17 und den Kondensator C 18 auf ein gemeinsames Bezugspotential zu bringen, während das Ausgangssignal 14 gegen ein zweites Bezugspotential abgegriffen wird, das mit einem den Komparator 21 versorgenden Potential übereinstimmt. Dadurch lassen sich gezielt Signalanpassungen vornehmen.

## Patentansprüche

1. Vorrichtung zur Luftgütemessung, mit zumindest einem Sensor (11), dessen Widerstand $R_S$ (17) von der Luftgüte (10) abhängt, der in einer astabilen Kippschaltung angeordnet ist, die ein RC-Glied (18,20) und einen Komparator (21) enthält, wobei

   - der invertierende Eingang des Komparators (21) über einen ersten Widerstand (20) des RC-Glieds (18,20) mit dem Ausgang, an dem das Ausgangssignal (14) abgegriffen ist, des Komparators (21) verbunden ist,
   - der nicht invertierende Eingang des Komparators (21) über einen zweiten Widerstand R2(19) mit dem Ausgang des Komparators (21) verbunden ist,
   - am invertierenden Eingang des Komparators (21) der Kondensator (18) des RC-Glieds (18,20) angeschlossen ist, der gegen ein Bezugspotential geschaltet ist,
   - am nicht invertierenden Eingang des Komparators (21) der Sensor (11) angeschlossen ist, der ebenfalls gegen ein Bezugspotential geschaltet ist, und
   - die Periodendauer (T1, T2, T3) des Ausgangssignals (14) logarithmisch vom Widerstand $R_S$ (17) des Sensors (11) abhängt.

2. Vorrichtung nach Anspruch 1, **dadurch gekennzeichnet, dass** der zweite Widerstand R2( 19) sehr viel kleiner ist als der Widerstand $R_S$ (17) des Sensors (11).

3. Vorrichtung nach Anspruch 1 oder 2, **dadurch gekennzeichnet, dass** der Widerstand ($R_S$) des Sensors (11) ein resistiver Widerstand ist.

4. Vorrichtung nach einem der vorhergehenden Ansprüche, **dadurch gekennzeichnet, dass** in Abhängigkeit vom Ausgangssignal (14) eine Belüftung eines Kraftfahrzeugs beeinflusst ist.

## Claims

1. Device for air quality measurement, with at least one sensor (11), whose resistance $R_s$ (17) depends on the air quality (10), which is arranged in an astable circuit, which contains an RC-member (18, 20) and a comparator (21), wherein

   - the inverted inlet of the comparator (21) is connected with the outlet of the comparator (21), at which the output signal (14) is picked up, via a first resistance (20) of the RC-member (18, 20),

   - the non-inverted inlet of the comparator (21) is connected with the outlet of the comparator (21) via a second resistance R2 (19),

   - on the inverted inlet of the comparator (21), the condenser (18) of the RC-member (18, 20) is connected, which is switched counter to a reference potential,

   - on the non-inverted inlet of the comparator (21), the sensor (11) is connected, which likewise is switched counter to a reference potential, and

   - the cycle duration (T1, T2, T3) of the output signal (14) depends in a logarithmic manner from

the resistance $R_s$ (17) of the sensor (11).

2. Device according to claim 1, **characterized in that** the second resistance R2 (19) is much smaller than the resistance $R_s$ (17) of the sensor (11).

3. Device according to claim 1 or 2, **characterized in that** the resistance ($R_s$) of the sensor (11) is a resistive resistance.

4. Device according to one of the preceding claims, **characterized in that** in dependence on the output signal (14), a ventilation of a motor vehicle is affected.

**Revendications**

1. Dispositif de mesure de la qualité de l'air comportant au moins un capteur (11), dont la résistance $R_s$ (17) dépend de la qualité de l'air (10), lequel est disposé dans un circuit astabile, qui contient un circuit RC (18,20) et un comparateur (21), dans lequel

   - l'entrée inverseuse du comparateur (21) est reliée par une première résistance (20) du circuit RC (18,20) à la sortie du comparateur (21), à laquelle le signal de sortie (14) est prélevé,

   - l'entrée non inverseuse du comparateur (21) est reliée par une deuxième résistance R2 (19) à la sortie du comparateur (21),

   - le condensateur (18) du circuit RC (18,20), lequel est commuté en fonction d'un potentiel de référence, est connecté à l'entrée inverseuse du comparateur (21) du condensateur (18),

   - le capteur (11), lequel est également commuté en fonction d'un potentiel de référence, est connecté à l'entrée non inverseuse du comparateur (21) du capteur (11) et

   - la durée de période (T1, T2, T3) du signal de sortie (14) dépend logarythmiquement de la résistance $R_s$ (17) du capteur (11).

2. Dispositif selon la revendication 1, **caractérisé en ce que** la deuxième résistance R2 (19) est beaucoup plus petite que la résistance $R_s$ (17) du capteur (11).

3. Dispositif selon la revendication 1 ou 2, **caractérisé en ce que** la résistance ($R_s$) du capteur (11) est une résistance résistive.

4. Dispositif selon une des revendications précédentes, **caractérisé en ce qu'**une aération d'un véhicule automobile est influencée par le signal de sortie (14).

EP 0 927 351 B1

Fig. 1

Fig. 2

Fig. 3a

Fig. 3b

6